# DEMANDE DE BREVET EUROPEEN

(11) **EP 4 730 579 A1**
(43) Date de publication de la demande: **22.04.2026**
(21) Numéro de dépôt: 25209827.2
(22) Date de dépôt: 20.10.2025
(51) Int. Cl.: H02B 1/056

(54) **DISPOSITIF DE DISTRIBUTION, BOITIER DE DÉPART, ENSEMBLE DE DISTRIBUTION, TABLEAU ÉLECTRIQUE ET PROCÉDÉ DE LOCALISATION ASSOCIÉS**

(30) Priorité: 21.10.2024 FR 2411463
(71) Demandeur: SCHNEIDER ELECTRIC INDUSTRIES SAS, 92500 Rueil-Malmaison (FR)
(72) Inventeur: DOMEJEAN, Eric, 92500 RUEIL MALMAISON (FR); TANGUY, Guillaume, 92500 RUEIL MALMAISON (FR); BURNOT, Claude, 92500 RUEIL MALMAISON (FR); CORONA, Fabien, 92500 RUEIL MALMAISON (FR)
(74) Mandataire: Lavoix

(57) **Abrégé**

Ce dispositif de distribution de puissance électrique, qui est configuré pour distribuer de l'énergie électrique provenant d'une source de puissance à au moins une charge électrique, comprend un bus de puissance, par lequel l'énergie électrique est transférée et qui est configuré pour recevoir au moins deux boitiers de départ, qui sont chacun prévus pour être connecté au bus de puissance et à une charge électrique respective. Le dispositif de distribution comprend un bus de transfert (150), qui définit plusieurs zones de montage (154) de chaque boitier de départ, chaque zone de montage étant associée à une position unique le long d'un axe principal (A110). Le bus de transfert comprend, pour chaque zone de montage, un circuit d'identification (160), qui est configuré pour transmettre à chaque boitier de départ une information relative à la position de la zone de montage où ce boitier de départ est monté.

## Description

La présente invention concerne un dispositif de distribution de puissance électrique, un boitier de départ configuré pour être connecté à un tel dispositif de distribution, un ensemble de distribution comprenant un tel dispositif de distribution, ainsi qu'un tableau électrique comprenant un tel ensemble de distribution. L'invention concerne également un procédé de localisation.

Un ensemble de distribution de puissance électrique permet d'alimenter en énergie électrique une ou plusieurs charges électriques, l'énergie électrique étant fournie par une source de puissance. On s'intéresse ici aux ensembles de distribution modulaires, c'est-à-dire configurables selon les besoins, notamment en fonction du nombre ou de la nature - notamment monophasée ou polyphasée- des charges électriques. L'ensemble de distribution comprend ainsi dispositif de distribution incluant un bus de puissance, sur lequel un ou plusieurs boitiers de départs peuvent être montés de manière réversible. Chaque boitier de départ est ensuite connecté à une charge électrique respective.

Le dispositif de distribution comprend un bus de transfert, qui permet le transfert d'informations vers les boitiers de départ et/ou d'énergie électrique nécessaire au fonctionnement des boitiers de départ. Pour des besoins d'exploitation et/ou de maintenance, il est nécessaire de connaitre la position dans laquelle les boitiers de départs sont montés sur le dispositif de distribution. Par exemple, les boitiers de départ comprennent des capteurs de courant différentiels et sont configurables à distance.

Il est connu d'utiliser des protocoles de communication permettant un adressage dynamique lors du montage des boitiers de départ. Seulement ces protocoles imposent l'utilisation de messages relativement complexes et longs en termes de bits, ce qui impose d'équiper les boitiers de départ de modules de communication dédiés, ce qui est encombrant et consomme de l'énergie. En outre, dans le cas d'applications sensibles en lien avec la sécurité des personnes, l'utilisation de tels protocoles est complexe à mettre en œuvre de manière sécurisée.

C'est à ces problèmes qu'entend plus particulièrement remédier l'invention, en proposant un dispositif de distribution qui soit à la fois simple, robuste, tout en permettant d'identifier la position des boitiers de départ lors de leur montage sur le dispositif de distribution.

À cet effet, l'invention concerne un dispositif de distribution de puissance électrique, configuré pour distribuer de l'énergie électrique provenant d'une source de puissance à au moins une charge électrique, la source de puissance comprenant un neutre et au moins une phase, le dispositif de distribution comprenant :
- un bus de puissance, qui comprend plusieurs barres conductrices :
   - qui incluent une barre de neutre et au moins une barre de phase et éventuellement une barre de neutre, la barre de neutre étant associée au neutre de la source de puissance, chaque barre de phase étant respectivement associée à une phase de la source de puissance,
   - qui s'étendent parallèlement entre elles selon un axe principal du dispositif de distribution et qui sont alignées selon un axe de hauteur qui est orthogonal à l'axe principal,
dans lequel :
- le bus de puissance est configuré pour recevoir au moins deux boitiers de départ, chaque boitier de départ comprenant :
   - un bornier d'arrivée, qui est connectable aux barres conductrices de manière réversible et qui comprend des bornes d'arrivée, chaque borne d'arrivée étant configurée pout être électriquement connectée à une barre conductrice respective, et
   - un bornier de départ, qui est configuré pour être connecté à une charge électrique et qui comprend des bornes de départ, chaque borne de départ étant respectivement associée à une borne d'arrivée respective,
- le dispositif de distribution comprend aussi un bus de transfert, qui comprend :
   - un corps, qui est réalisé en un matériau électriquement isolant, qui présente une forme allongée s'étendant le long du bus de puissance, et qui définit plusieurs zones de montage de chaque boitier de départ, les zones de montage étant réparties le long de l'axe principal et étant chacune associée à une position unique le long de l'axe principal,
   - au moins deux lignes de transfert, qui s'étendent le long du corps est qui sont configurées pour être électriquement connectées à chaque boitier de départ lorsque le boitier de départ est connecté au bus de puissance au niveau d'une des zones de montage, le boitier de départ étant dans une position montée sur le dispositif de distribution,
- le bus de transfert, un circuit d'identification en position, qui est configuré pour transmettre au boitier de départ en configuration montée une information relative à la position, le long de l'axe principal, de la zone de montage sur laquelle le boitier de départ est monté.

Grâce à l'invention, lors du montage d'un boitier de départ sur le dispositif de distribution, ce boitier de départ est apte à déterminer immédiatement, et de manière univoque, sa position le long du dispositif de distribution, et ce au moyen d'un circuit d'identification simple à réaliser et robuste. On évite ainsi l'emploi de protocoles plus compliqués nécessitant des composants volumineux et/ou consommateurs d'énergie.

Selon des aspects avantageux mais non obligatoires de l'invention, un tel dispositif de distribution peut incorporer une ou plusieurs des caractéristiques suivantes prises isolément ou selon toute combinaison techniquement admissible :
- Pour chaque zone de montage, le circuit d'identification comprend un composant d'identification, qui est choisi parmi une résistance, une inductance, une diode Zener, une référence de tension ou une capacité, de sorte que lorsque le boitier de départ est en configuration montée et est alimenté en énergie électrique, le boitier de départ applique une première grandeur électrique aux bornes du composant d'identification et mesure une deuxième grandeur électrique caractéristique du composant d'identification, la deuxième grandeur électrique caractéristique étant liée, de manière univoque, à la position unique de la zone de montage considérée.
- Pour chaque zone de montage, le composant d'identification est une résistance.
- Les résistances présentent chacune une valeur de résistance propre, qui est exprimée en Ohm et qui évolue graduellement à mesure qu'on se déplace le long de l'axe principal.
- Les zones de montage sont réparties régulièrement le long de l'axe principal.
- Le bus de transfert comprend une pluralité de zones de montage, par exemple quinze zones de montage, qui sont espacées les unes des autres d'un pas régulier, par exemple multiple de 9mm.

L'invention concerne aussi un boitier de départ, qui est configuré pour être conjointement connecté à un dispositif de distribution tel que défini précédemment, le boitier de départ comprenant :
- un bornier d'arrivée, qui est connectable au bus de puissance de manière réversible et qui comprend des bornes d'arrivée, chaque borne d'arrivée étant configurée pout être électriquement connectée à une barre conductrice respective, et
- un bornier de départ, qui est configuré pour être connecté à une charge électrique et qui comprend des bornes de départ, chaque borne de départ étant associée à une borne d'arrivée respective, et
- un bornier de transfert, qui comprend :
   - des bornes de transfert, qui sont configurées pour être connectées au bus de transfert de manière à être électriquement connectées aux lignes de transfert, et
   - des bornes de positionnement, qui sont configurées pour être électriquement connectées au circuit d'identification associé à la zone de montage considérée.

Avantageusement, le boitier de départ comprend aussi un microcontrôleur, qui est configuré pour que, lorsque le boitier de départ est en configuration montée sur une des zones de montage et est alimenté en énergie électrique, le boitier de départ applique, au moyen du microcontrôleur, une première grandeur électrique aux bornes du composant d'identification et mesure une deuxième grandeur électrique caractéristique du composant d'identification, la deuxième grandeur électrique caractéristique étant liée, de manière univoque, à la position unique de la zone de montage considérée.

L'invention concerne également un ensemble de distribution, comprenant :
- le dispositif de distribution tel que défini précédemment, et
- un exemplaire du boitier de départ tel que défini précédemment, **ET** / OU
- un boitier principal, qui est configuré pour être monté sur le dispositif de distribution et qui comprend :
   - des bornes d'entrée, chaque borne d'entrée étant configurée pour être reliée à une phase respective et éventuellement au neutre de la source de puissance,
   - des bornes de sortie, qui sont configurées pour être reliées aux barres conductrices, chaque borne de sortie étant associée à une barre conductrice respective et à une borne d'entrée respective,
dans lequel :
- le bus de transfert comprend également une zone de connexion, qui est prévue pour la connexion à un bornier complémentaire du boitier principal en position montée, de sorte que le boitier principal est électriquement connecté aux lignes de transfert,
- le boitier principal est configuré pour recevoir, par l'intermédiaire des lignes de transfert et pour chaque boitier de départ en position montée, des informations relatives à la position, le long de l'axe principal, de la zone de montage sur laquelle le boitier de départ considéré est monté,
- le boitier de départ et / ou le boitier principal sont chacun en configuration montée sur le dispositif de distribution.

L'invention concerne également un tableau électrique, comprenant :
- un coffre, délimitant une enceinte et présentant un fond,
- l'ensemble de distribution tel que défini précédemment,
dans lequel l'ensemble de distribution est fixé sur le fond du coffre.

Selon un autre aspect, l'invention concerne un procédé de localisation d'un boitier de départ monté sur un dispositif de distribution, le procédé de localisation comprenant :
- fournir le dispositif de distribution et un boitier de départ tels que définis précédemment,
- monter le boitier de départ sur l'une des zones de montage, de sorte que :
   - le bornier de transfert est électriquement connecté au bus de transfert, alimentant en énergie électrique un microcontrôleur du boitier de départ,
   - les bornier de transfert est électriquement connectés au circuit d'identification,
- ensuite, au moyen du microcontrôleur alimenté en énergie :
   - appliquer une première grandeur électrique aux bornes du composant d'identification par l'intermédiaire du bornier de transfert, et mesurer une deuxième grandeur électrique caractéristique du composant d'identification, puis
   - en déduire la position unique, le long du bus de transfert, de la zone de montage sur laquelle est monté le boitier de départ, au moyen d'une table de correspondance, préalablement enregistrée dans une mémoire du microcontrôleur, reliant de manière univoque des intervalles de la deuxième grandeur électrique caractéristique à une position unique le long du bus de transfert.

Ce procédé induit les mêmes avantages que ceux mentionnés ci-dessus au sujet du dispositif de distribution de l'invention.

L'invention sera mieux comprise, et d'autres avantages de celle-ci apparaîtront plus clairement à la lumière de la description qui va suivre, d'un mode de réalisation d'un dispositif de distribution, d'un boitier de départ, d'un sous-ensemble de distribution, d'un tableau électrique et d'un procédé de localisation, conformes à son principe, donnée uniquement à titre d'exemple et faite en référence aux dessins annexés, dans lesquels :
- [Fig 1] la figure 1 est une vue en perspective partiellement éclatée un tableau électrique conforme à l'invention, le tableau électrique comprenant un ensemble de distribution, lui-aussi conforme à l'invention ;

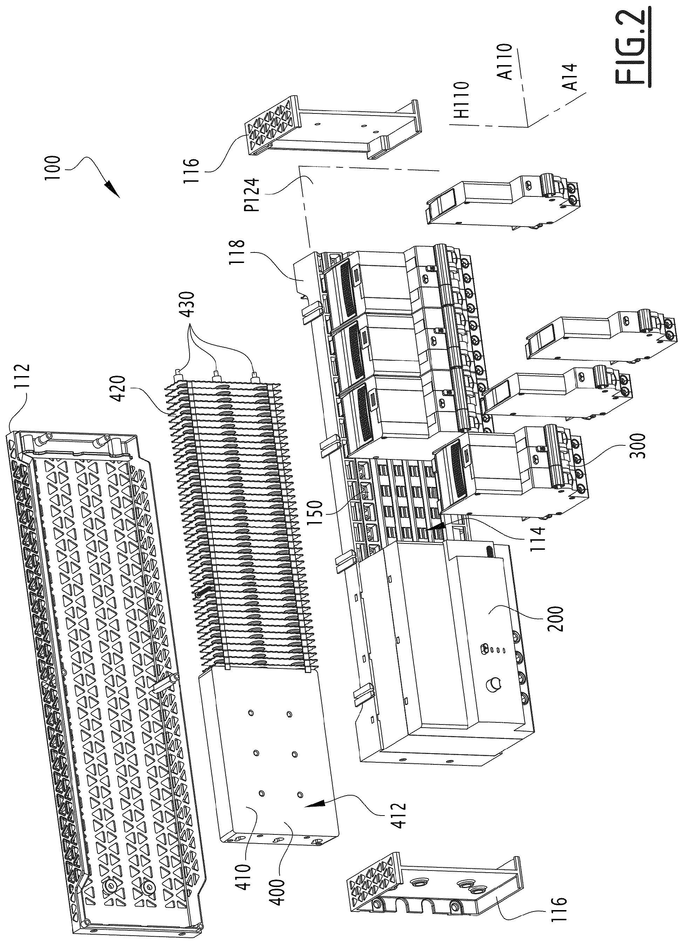

- [Fig 2] la figure 2 est une vue en perspective partiellement éclatée de l'ensemble de distribution de la figure 1 ;
- [Fig 3] la figure 3 représente respectivement, sur deux inserts a) et b), une vue en perspective de l'ensemble de distribution de la figure 1, certaines pièces étant cachées, et une vue en perspective d'un bus de transfert de l'ensemble de distribution,
- [Fig 4] la figure 4 est une vue en perspective partiellement éclatée de l'ensemble de distribution de la figure 1, certaines pièces étant cachées ;
- [Fig 5] la figure 5 est une représentation schématique de l'ensemble de distribution de la figure 1, et
- [Fig 6] la figure 6 représente respectivement, sur deux inserts a) et b), une partie du bus de transfert de la figure 3, observé en perspective selon deux angles de vue opposés.

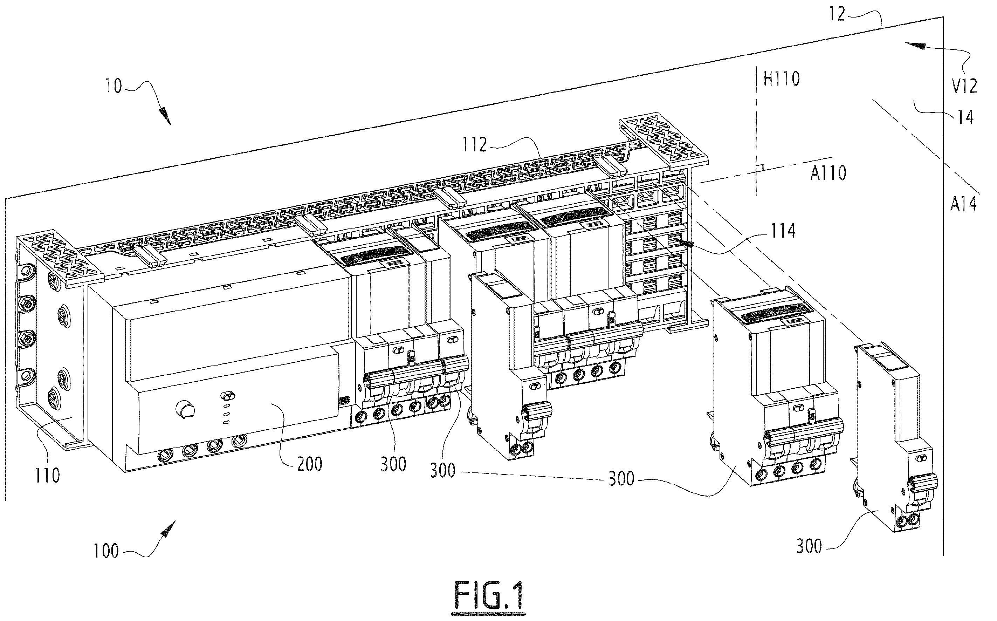

Un tableau électrique 10, conforme à l'invention, est représenté à la figure 1. Le tableau électrique 10 comprend un coffre 12, qui délimite une enceinte V12 et qui présente un fond 14. Le fond 14 s'étant globalement dans un plan orthogonal à un axe de profondeur A14. L'enceinte V12 est avantageusement refermée par une porte, qui n'est pas représentée.

Le tableau électrique 10 comprend un ensemble de distribution 100. L'ensemble de distribution 100 est fixé sur le fond 14 du boitier 12. L'ensemble de distribution 100 est configuré pour distribuer de l'énergie électrique provenant d'une source de puissance à au moins une charge électrique. Dans l'exemple illustré, la source de puissance est une source triphasée, comprenant un neutre et trois phases. En variante non illustrée, la source de puissance est monophasée, comprenant un neutre et une seule phase. Selon une autre variante, la source de puissance comprend trois phases, et pas de neutre. La source de puissance et la charge électrique, qui ne sont pas représentées, ne font pas partie de l'invention mais servent à en expliquer le contexte de fonctionnement.

La source de puissance et la charge électrique, qui ne sont pas représentées, ne font pas partie de l'invention mais servent à en expliquer le contexte de fonctionnement.

L'ensemble de distribution 100 comprend un dispositif de distribution 110, par lequel l'ensemble de distribution 100 est fixé sur le fond 14, un boitier principal 200, qui est assemblé au dispositif de distribution 110, de préférence de manière réversible, et au moins un boitier de départ 300, ici sept boitiers de départ, chaque boitier de départ 300 étant assemblé au dispositif de distribution 110 de manière réversible, dans une position montée du dispositif de départ 300. À cet effet, chaque boitier de départ 300 comprend des moyens mécaniques de montage, qui sont configurés pour coopérer avec des moyens complémentaires du dispositif de distribution 110, de manière à maintenir le boitier de départ 300 en position montée. Les moyens mécaniques et les moyens complémentaires ne sont pas détaillés dans la présente description.

**Il** est ainsi possible de remplacer, au besoin, le boitier principal 200 en cas de dysfonctionnement du boitier principal 200, tout en conservant les autres éléments de l'ensemble de distribution 100, dispositif de distribution 110 et boitier(s) de départ 300, ce qui est économique. De même, il est possible de remplacer, au besoin, un ou plusieurs des boitiers de départ 300, par exemple en cas de dysfonctionnement, tout en conservant les autres éléments, dispositif de distribution 110 et boitier principal 200, ce qui est économique.

Le dispositif de distribution 110 présente une forme allongée, qui s'étend selon un axe principal A110. Lorsque l'ensemble de distribution 100 est dans une configuration normale de fonctionnement, l'axe principal A110 est parallèle au fond 14, autrement dit orthogonal à l'axe de profondeur A14. De préférence, l'axe principal A110 est horizontal, comme illustré à la figure 1. On définit un axe de hauteur H110 comme étant un axe orthogonal à la fois à l'axe de profondeur A14 et à l'axe principal A110. La description est faite en regarde de l'orientation des dives éléments tels que représentés sur les figures, sachant qu'il peut en être autrement dans la réalité.

Dans l'exemple de la figure 1, le boitier principal 200 est situé sur la gauche de l'ensemble de distribution 100, les boitiers de départ 300 étant situé sur la droite du boitier principal 200.

Lorsque l'ensemble de distribution 100 est fixé sur le fond 14, une portion arrière 112 du dispositif de distribution 110 est orientée en regard du fond 14, autrement dit orientée vers une direction arrière de l'ensemble de distribution 100. La direction arrière est ainsi parallèle à l'axe de profondeur A14. On définit également une direction avant comme étant une direction opposée à la direction arrière.

Le dispositif de distribution 110 présente ainsi une face de montage 114, qui est globalement orientée vers l'avant et qui est prévue pour le montage du boitier principal 200 et de chaque boitier de départ 300.

La portion arrière 112 est réalisée en un matériau électriquement isolant, par exemple en polymère synthétique. La portion arrière 112 présente ici une forme globalement rectangulaire, qui s'étend dans sa plus grande dimension parallèlement à l'axe principal A110. Les petits côtés du rectangle sont ainsi parallèles à l'axe de hauteur H110. Le dispositif de distribution 110 comprend ici deux flasques 116, qui sont réalisés en un matériau électriquement isolant. Les deux flasques 116 sont assemblés aux petits côtés de la portion arrière 112 de manière à former un panier,

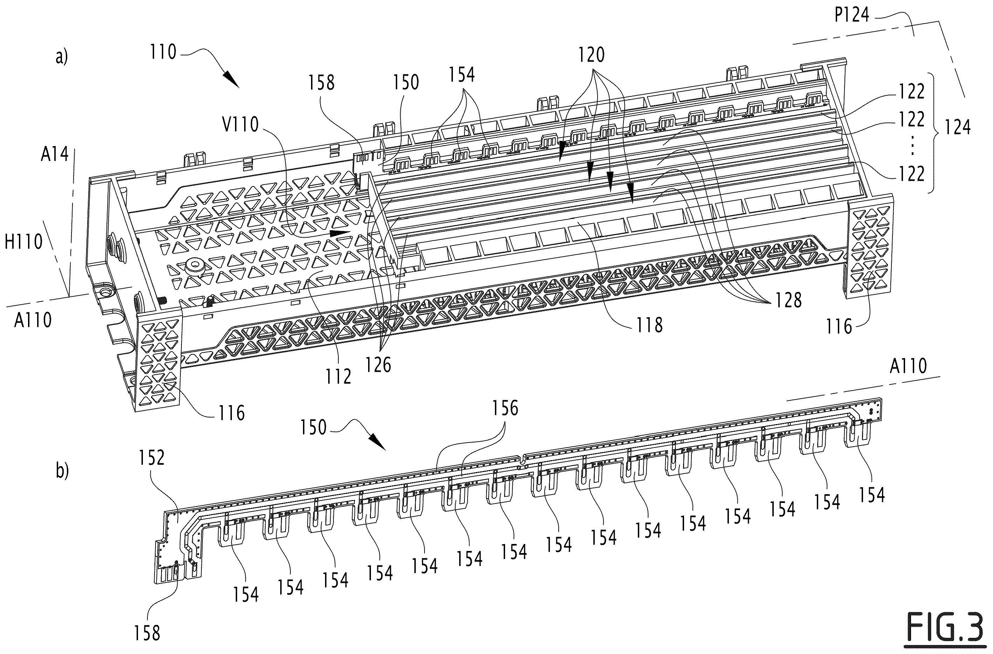

Le dispositif de distribution 110 comprend ici une paroi isolante 118, qui est réalisée en un matériau électriquement isolant et qui est assemblée à la portion arrière 112 et aux flasques 116, de manière à former une cavité V110, comme illustré à la figure 3.

Dans l'exemple illustré, le dispositif de distribution 110 comprend avantageusement un dispositif de refroidissement 400, qui est reçu dans la cavité V110 et qui est prévu pour évacuer une partie de la chaleur générée par le boitier principal 200 lorsque l'ensemble de distribution 100 est en fonctionnement. Le dispositif de refroidissement 400 est ainsi situé d'un côté arrière de la paroi isolante 118, tandis que d'un côté avant de la paroi isolante 118, le côté avant étant orienté à l'opposé du côté arrière, la paroi isolante 118 ménage des sillons 120 prévus pour recevoir plusieurs barres conductrices 122, ici quatre barres conductrices 122. Les barres conductrices 122 forment ensemble un bus de puissance 124 du dispositif de distribution 110 et, par extension, de l'ensemble de distribution 100. Le dispositif de distribution 110 est ainsi un dispositif de distribution de puissance. La portion arrière 112 est préférentiellement ajourée, de manière à favoriser le refroidissement, par convection, du dispositif de refroidissement 400. Le dispositif de distribution 110 forme ainsi une cage autour du dispositif de refroidissement 400.

Les barres conductrices 122 s'étendent parallèlement entre elles selon l'axe principal A110 de l'ensemble de distribution 100 et sont alignées selon l'axe de hauteur H100. Les barres conductrices 122 définissent ensemble un plan de connexion P124, qui est un plan orthogonal à l'axe de profondeur A14, autrement dit parallèle à l'axe de hauteur H110 et à l'axe principal A110. La face de montage 114 est globalement parallèle au plan de connexion P124.

Le dispositif de refroidissement 400 comprend une plaque de contact 410, qui est prévue pour capter une partie de la chaleur dégagée par le boitier principal 200, un radiateur 420, qui est prévu pour dissiper de la chaleur dans l'air ambiant, et au moins un caloduc 430, ici trois caloducs, qui relie la plaque de contact 410 au radiateur 420 et qui est configuré pour transférer au radiateur 420 une partie de la chaleur captée par la plaque de contact 410.

Les barres conductrices 122 incluent au moins une barre de phase et, éventuellement, une barre de neutre, la barre de neutre étant associée au neutre de la source de puissance, chaque barre de phase étant associée à une phase respective de la source de puissance. Dans l'exemple illustré, le bus de puissance 124 comprend quatre barres conductrices 122, la source de puissance étant une source triphasée avec un neutre. L'ensemble de distribution 100 présente ici une configuration dite « 3P+N », ou simplement 3PN.

En variante non représentée, la source de puissance est triphasée, avec ou sans neutre, tandis que l'ensemble de distribution ne comprend pas de barre conductrice associée au neutre. Autrement dit, l'ensemble de distribution ne comprend que trois barres de phases, chacune associée à une phase respective de la source de puissance. L'ensemble de distribution est alors dans une configuration dite 3P.

Les principes de l'invention sont transposables quel que soit le nombre de phases de la source de puissance. Selon une autre variante non illustrée, la source de puissance est monophasée, c'est-à-dire ne comprend que le neutre et une seule phase. Les barres conductrices incluent alors une seule barre de phase, et la barre de neutre. L'ensemble de distribution est alors dans une configuration dite P+N, ou simplement PN. Quelles que soient les configurations, on a toujours plusieurs barres conductrices, qui incluent au moins une barre de phase, et éventuellement une barre de neutre.

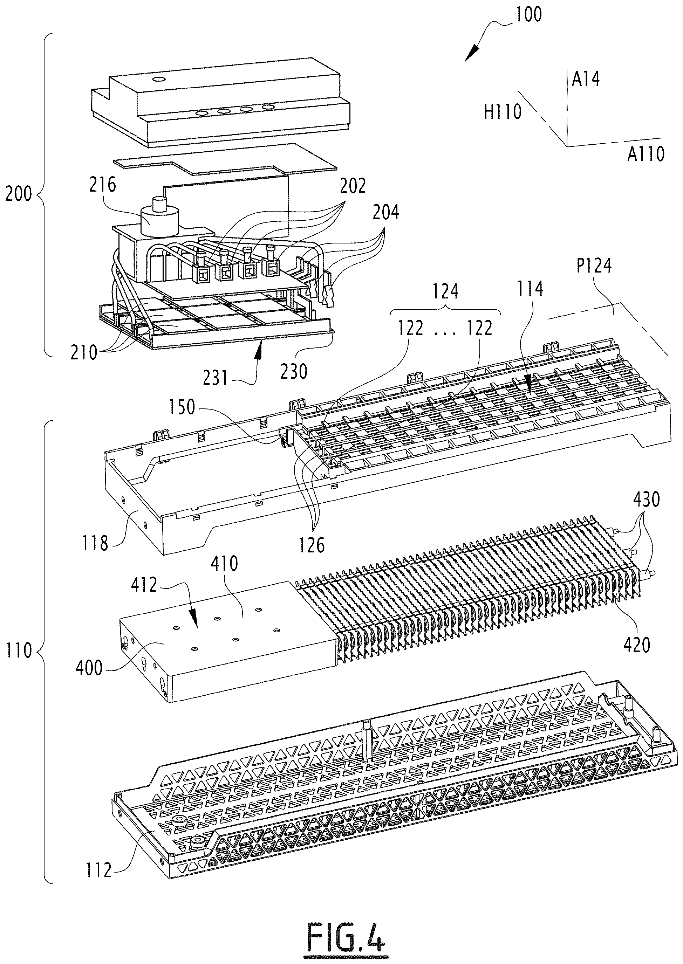

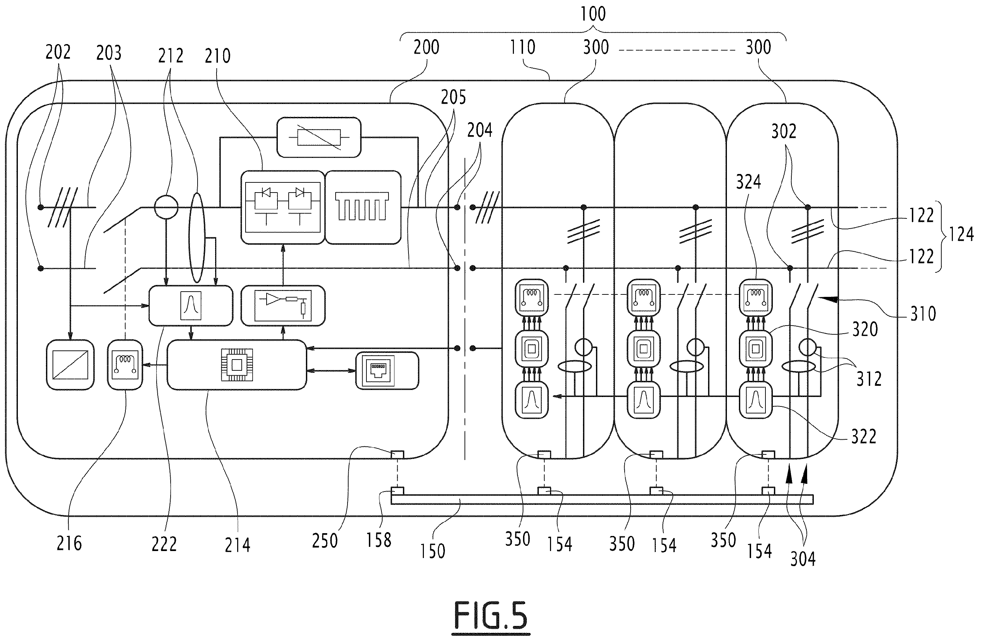

On décrit à présent le boitier principal 200, notamment en référence aux figures 4 et 5. Sur la figure 5, le circuit d'une seule phase est représenté, les trois phases étant représentées, selon une convention connue, par trois traits parallèles en travers du circuit.

Le boitier principal 200 comprend des bornes d'entrées 202, qui sont configurées pour être relié au neutre et à chaque phase de la source de puissance, et des bornes de sorties 204, qui sont configurées pour être reliées aux barres conductrices, chaque borne de sortie étant associée à une barre conductrice respective et à une borne d'entrée respective. Les bornes d'entrée 202 sont ici des bornes à vis. Avantageusement, les bornes de sortie 204 sont des pinces de raccordement, qui sont chacune prévus pour la connexion réversible à une barre conductrice122 respective, selon un mouvement de connexion orienté vers l'arrière de l'ensemble de distribution 100. Ainsi, au cours du mouvement de à la connexion des bornes de sortie 204 aux barres conductrices 122, la face arrière du boitier principal 200 vient en appui contre la face de contact 412.

Pour chaque borne d'entrée 202, le boitier principal comporte une ligne d'entrée 203 correspondante, qui est reliée à la borne d'entrée 202 correspondante, et une ligne de sortie 205, qui est reliée à la borne de sortie 204 associée.

Le boitier principal 200 comprend des moyens de coupure statiques 210, qui sont commutables entre une configuration passante, dans laquelle chaque borne d'entrée 202 associée à une phase de la source de puissance est électriquement reliée à la borne de sortie 204 associée, le boitier principal 200 étant dans une configuration passante, et une configuration de coupure, dans laquelle le passage d'un courant électrique entre la borne d'entrée 202 et la borne de sortie 204 associée est empêché, le boitier principal 200 étant dans une configuration de coupure.

Les moyens de coupure statiques 210 sont des interrupteurs de puissance base de composants semi-conducteurs, de préférence des transistors à effet de champ à grille isolée, ou MOSFET, et sont ainsi dits « statiques » par opposition aux moyens de coupure à contact mobile. Les moyens de coupure statiques 210 sont branchés en série entre la ligne d'entrée 203 et la ligne de sortie 205 associée. Les moyens de coupure statique 210 sont représentés schématiquement aux figures 4 et 5.

En fonctionnement, les moyens de coupure 210 dégagent de la chaleur, de l'ordre de quelques dizaines de Watts. Les moyens de coupure 210 sont avantageusement disposés de manière à favoriser le transfert d'au moins une partie de la chaleur dégagée vers le dispositif de refroidissement 400.

En particulier, les moyens de coupure 210 sont avantageusement agencés contre une paroi arrière 231 du boitier principal 200, de préférence en contact surfacique contre la paroi arrière 231. La paroi arrière 231 ménage la face arrière 230, la face arrière 230 étant orientée à l'opposé des moyens de coupure 210. La paroi arrière 231 est ainsi intercalée entre les moyens de coupure 210 et la plaque de contact 410 lorsque la boitier principal 200 est monté sur le dispositif de distribution 110, de manière qu'une partie de la chaleur générée par les moyens de coupure 210 en fonctionnement est transférée à la plaque de contact 410 au travers de la paroi arrière.

La paroi arrière 231 est réalisée en un matériau thermiquement conducteur et électriquement isolant. Dans l'exemple illustré, la paroi arrière 231 est formée d'un assemblage d'une plaque électriquement isolante, réalisée en matériau polymère synthétique, et d'une plaque de cuivre, qui apporte rigidité à l'ensemble tout en favorisant la conductivité thermique, la plaque de cuivre ménageant la face arrière 230 et étant en appui contre la plaque de contact 410 lorsque le boitier principal 200 est monté sur le dispositif de distribution 110.

Le boitier principal 200 comprend des moyens de détection principaux 212, qui sont configurés pour mesurer des grandeurs électriques aux bornes de sortie et pour détecter un défaut électrique en fonction des valeurs mesurées. Les moyens de détection principaux 212 sont ici représentés par des boucles de mesures, qui sont ici agencés sur les lignes de sortie 205. De préférence, les moyens de détection principaux 212 incluent un dispositif de détection de courant différentiel.

Le boitier principal 200 est configuré pour passer de la configuration passante à la configuration de coupure lorsque les moyens de détection principaux 212 détectent un premier défaut électrique.

Le boitier principal 200 comprend une unité de contrôle 214, ou ECU en anglais pour *Electronic Control Unit,* qui est configurée pour piloter les moyens de coupure statiques 210, autrement dit pour faire commuter les moyens de coupure statiques 210 entre la configuration passante et la configuration de coupure. L'unité de contrôle 214 est également configurée pour analyser les valeurs mesurées par les moyens de détection principaux 212 et pour déterminer, en fonction de critères prédéfinis correspondant à un type prédéterminé de défaut électrique, la présence d'un défaut électrique du type prédéterminé. À la figure 5, l'utilisation de critères prédéfinis est représentée schématiquement par la présence d'un filtre dit « primaire » 222, le filtre primaire 222 étant est intercalé entre les moyens de détection principaux 212 et l'unité de contrôle 214. Il existe plusieurs types de défauts différentiels, qui sont définis notamment dans la norme IEC 60755:2017. En particulier, les types de défauts électriques incluent le fait que le signal électrique soit redressé, que le signal inclut une composante à haute fréquence, le calibre - par exemple 30 mA ou 300 mA -... On comprend que le filtre primaire 222 définit des critères de détection des défauts électriques par l'unité de contrôle 214 du boitier principal 200. De préférence, le filtre primaire 222 définit des critères de détection d'un type de défaut différentiel prédéterminé, le défaut préférentiel prédéterminé étant choisi parmi les défauts définis dans la norme IEC 60755:2017.

On définit un délai de coupure ΔC comme étant un intervalle de temps entre l'instant de la détection du défaut électrique et le passage en configuration de coupure. Le délai de coupure ΔC inclut ainsi le temps nécessaire pour analyser les mesures réalisées par les moyens de détection principaux, le temps nécessaire pour envoyer un ordre d'ouverture aux moyens de coupure statiques 210, et le temps de coupure des moyens de coupure statiques 210 une fois que l'ordre d'ouverture est envoyé. Typiquement, le temps de coupure des moyens de coupure statiques 210 dépend de la structure des moyens de coupure statiques et est inférieur à 1 microseconde - µs -. Ainsi le délai de coupure ΔC est essentiellement lié au fonctionnement de l'unité de contrôle 210. Typiquement, le délai de coupure ΔC est de l'ordre de la microseconde ou de quelques dizaines de microsecondes, par exemple compris entre 5 µs et 500 µs.

De préférence, le boitier principal 202 comprend aussi, pour chaque borne d'entrée 202, un dispositif de coupure générale 216, qui est un dispositif de coupure à contacts séparables, ici un sectionneur. Le dispositif de coupure générale 216 est piloté par l'unité électronique de contrôle 214 et permet déconnecter électriquement la source de puissance de l'ensemble de distribution 100, par exemple en cas de dysfonctionnement des moyens de coupure statiques 210. Le dispositif de coupure générale 216 est intercalé chaque borne d'entrée 202 et les moyens de coupure statiques 210.

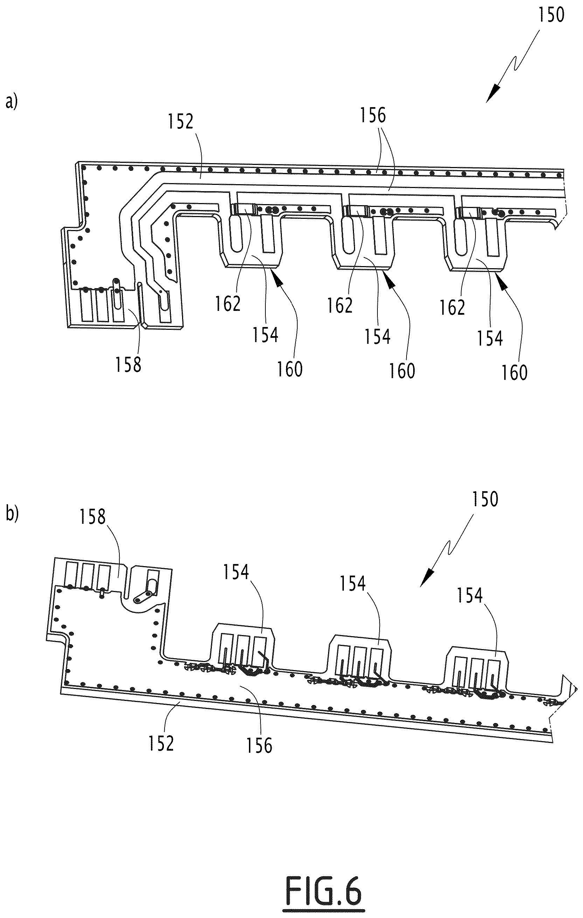

Avantageusement, le dispositif de distribution 110, et par extension l'ensemble de distribution 100, comprend aussi un bus de transfert 150. Le bus de transfert 150, qui est représenté isolément à la figure 3 b) et partiellement à plus grande échelle à la figure 6, est ici prévu pour le fonctionnement pour alimenter en énergie chaque boitier de départ 300 en position montée, c'est-à-dire connecté aux barres conductrices 122. Le bus de transfert 150 est donc ici un bus de transfert d'énergie, autrement dit un bus d'alimentation, qui est distinct du bus de puissance 124. Selon un exemple illustratif, le bus de transfert 150 fonctionne sous une tension de quelques dizaines de Volts, par exemple 50 V en continu, tandis que le bus de puissance 124 fonctionne sous une tension de 400 V en triphasé alternatif. Le bus de transfert 150 est ici une pièce distincte, qui est assemblée au reste du dispositif de distribution 110. Le bus de transfert 150 est ainsi simple à fabriquer et, le cas échéant, à remplacer.

Le bus de transfert 150 comprend un corps 152, qui est réalisé en un matériau électriquement isolant, qui présente une forme allongée s'étendant le long du bus de puissance 124. Ainsi le bus de de transfert 150 s'étend le long de l'axe principal A110.

Le bus de transfert 150 définit plusieurs zones de montage 154, qui sont prévues pour être connectées à chaque boitier de départ en position montée, les zones de montage 154 étant réparties, de préférence régulièrement, le long de l'axe principal A110 et étant chacune associée à une position unique le long de l'axe principal A110. Le bus de transfert 150 comprend une pluralité de zones de montage 154, préférentiellement quinze zones de montage, qui sont espacées les unes des autres d'un pas constant. Les zones de montage 154 sont ici espacées les unes des autres d'un pas de 18 mm. D'autres pas sont bien entendu possibles. En variante non représentée, les zones de montages 154 sont espacées les unes des autres d'un pas de 9 mm. De manière générale, les zones de montage 154 sont espacées d'un pas régulier, de préférence un multiple entier de 9 mm.

Le bus de transfert 150 comprend au moins deux lignes de transfert 156, qui s'étendent le long du corps 152 est qui sont configurées pour être électriquement connectées à chaque boitier de départ 300 en position montée. Les lignes de transfert 156 sont ici des lignes d'alimentation.

Le bus de transfert 150 comprend également une zone de connexion 158, qui est prévue pour la connexion du boitier principal 200 en position montée sur le dispositif de distribution 110. Par exemple, le boitier principal 200 comprend un bornier complémentaire 250, qui est configuré pour coopérer avec la zone de connexion 158, de sorte que le boitier principal est électriquement connecté aux lignes de transfert 156. Dans l'exemple préférentiel illustré, le boitier principal 200 prélève de l'énergie électrique nécessaire à l'alimentation du bus de transfert 150 sur le neutre et les phases de la source de puissance, entre les moyens de coupure statique 210 et le dispositif de coupure générale 216, l'énergie électrique ainsi fournie étant à disposition des boitiers de départ 300 pour leur fonctionnement.

Le bus de transfert 150 est ici réalisé par une carte de circuit imprimé, les lignes de transfert 156 étant des pistes conductrices ménagées en surface de la carte, tandis que les zones de montage 154 et la zone de connexion 158 sont des pattes ménagées dans le substrat de la carte.

Chaque boitier de départ 300 en position montée occupe une ou plusieurs zones de montage 154 juxtaposés, interdisant le montage d'autres boitiers de départ 300 sur la ou les zones de montages 154 ainsi occupées. De préférence, un boitier de départ 300 prévu pour la connexion d'une charge électrique monophasée occupe une seule zone de montage 154, tandis qu'un boitier de départ 300 prévu pour la connexion d'une charge électrique triphasée occupe trois zones de montage 154 juxtaposées. Ainsi la position de chaque boitier de départ 300 le long du dispositif de distribution 110 est définie, de manière univoque, par la ou les zones de montage 154 occupées par le boitier de départ 300 considéré. De préférence, lorsqu'un boitier de départ 154 occupe plusieurs zones de montage 154 juxtaposées, la position de ce boitier de départ 154 le long du dispositif de distribution 110 est définie par celle des zones de montage 154 ainsi occupées qui est la plus proche de la zone de connexion 158.

On décrit à présent les boitiers de départ 300.

Chaque boitier de départ 300 comprend ainsi un bornier d'arrivée qui est connectable aux barres conductrices 122 de manière réversible et qui comprend au moins deux bornes d'arrivée 302, chaque borne d'arrivée 302 étant configurée pout être électriquement connectée à une barre conductrice 122 respective. Pour chaque boitier de départ 300, les bornes d'arrivée 302 qui incluent une borne d'arrivée neutre, qui est configurée pour être électriquement connectée à la barre neutre, et entre une et trois autres bornes d'arrivée, qui sont chacune configurées pour être connectée à une barre de phase respective. Chaque boitier de départ 300 est configuré pour être monté, de manière réversible, sur le bus de puissance 114, de sorte que chaque borne d'arrivée 302 est électriquement reliée à la barre conductrice 122 correspondante.

Chaque boitier de départ 300 comprend aussi un bornier de départ, qui est configuré pour être connecté à une charge électrique et qui comprend des bornes de départ 304, chaque borne de départ 304 étant respectivement associée à une borne d'arrivée 302 respective. Les bornes de départ 304 sont représentées schématiquement à la figure 5.

Dans l'exemple illustré, les boitiers de départs 300 présentent des largeurs différentes, la largeur étant mesurée selon l'axe principal A110. Ainsi les boitiers de départs 300 sont répartis en deux sous-groupes, qui correspondent à deux largeurs différentes, avec des boitiers de départs 300 fins et des boitiers de départ 300 larges, qui sont sensiblement trois fois plus larges que les boitiers de départ 300 fins. D'autres largeurs de boitiers de départ 300 sont bien entendu envisageables. La largeur des boitiers de départ 300 est de préférence un multiple du pas entre chaque zone de montage 154 du bus de transfert 150, soit ici 18 mm. En variante non représentée, les boitiers de départ 300 ont une largeur égale à un multiple de 9 mm.

Les boitiers de départs 300 les plus fins sont configurés pour être connectés à deux barres conductrices 122, incluant une barre neutre et une barre de phase, tandis que les boitiers de départs 300 larges sont configurés pour être connectés à quatre barres conductrices 122. Les principes de l'invention sont applicables quel que soit le nombre de phases auxquelles sont connectés chacun des boitiers de départ 300.

De préférence, le dispositif de distribution 110 est prévu pour recevoir cinq boitiers de départs 300, qui comprennent chacun quatre bornes d'arrivées, autrement dit cinq boitiers de départs 300 larges. Selon un exemple non illustré, l'ensemble de distribution 100 comprend cinq boitiers de départs 300, qui comprennent chacun quatre bornes d'arrivées 302. En corolaire, le dispositif de distribution 110 est également prévu pour recevoir quinze boitiers de départs 300 fins comprenant chacun deux bornes d'arrivée 302.

Les barres conductrices 122 comprennent chacune :
- une portion d'alimentation 126, qui est configurée pour être connectée à une borne de sortie 204 associée du boitier principal 200 dans une configuration montée du boitier principal, et
- une portion de connexion 128, qui s'étend d'un même côté de la portion d'alimentation 126. Les portions de connexion 128 sont géométriquement situées d'un côté avant du plan de connexion P124 et définissent ensemble une zone de connexion du bus de puissance 124.

À la figure 4, seules les portions d'alimentation 126 des barres conductrices 122 sont visibles, les portions de connexion 128 étant cachées. La zone de connexion est configurée pour recevoir au moins un boitier de départ 300, de sorte que le boitier de départ est relié au bus de puissance 129. Le boitier de départ 300 est alors propre à être connecté à une charge électrique, de manière à alimenter la charge électrique en puissance électrique.

Chaque boitier de départ 300 comprend des moyens de coupure électromécaniques 310, qui sont intercalés entre chaque borne d'arrivée 302 et la borne de départ 304 correspondante. Les moyens de coupure électromécaniques 310 comprennent des contacts séparables, qui sont déplaçables entre une position fermée, dans laquelle chaque borne d'arrivée 302 est électriquement reliée à la borne de départ 304 associée, le boitier de départ 300 concerné étant dans une configuration fermée, et une position ouverte, dans laquelle le passage d'un courant électrique entre la borne d'arrivée 302 et la borne de départ 304 associée est empêché, le boitier de départ 300 concerné étant dans une configuration ouverte.

Chaque boitier de départ 300 comprend des moyens de détection secondaires 312, qui sont configurés pour mesurer des grandeurs électriques aux bornes de départ correspondantes et pour détecter au moins un défaut électrique d'un type prédéterminé, c'est-à-dire correspondant à des critères de détection prédéterminés. Les moyens de détection secondaires 312 sont ici représentés par des boucles de mesures, qui sont ici agencés sur les fils reliant les bornes d'arrivée 302 aux bornes de départ 304.

De préférence, les moyens de détection secondaires 312 incluent un dispositif de détection de courant différentiel. De préférence, le boitier de départ 300 comprend un microcontrôleur 320, qui est configuré pour évaluer la mesure de courant différentiel à l'aide d'un filtre dit « secondaire » 322, le filtre secondaire 322 étant préalablement enregistré dans une mémoire du microcontrôleur 320 du boitier de départ 300 et étant adapté pour la détection d'un défaut différentiel.

Le microcontrôleur 320 est alimenté par l'intermédiaire du bus de transfert 150. À cet effet, chaque boitier de départ 300 comprend un bornier de transfert 350, qui comprend des bornes de transfert - non représentées -, le bornier de transfert 350 étant configuré pour être connecté au bus de transfert 150 de sorte que chaque borne de transfert est électriquement connectée à une ligne de transfert 156 respective. Le bornier de transfert 350 est donc ici un bornier d'alimentation. Les bornes de transfert sont différentes des bornes d'arrivée 302 ou des bornes de départ 304. Chaque boitier de départ 300 en position montée sur le dispositif de distribution 110 est ainsi conjointement connecté au bus de puissance 124, par l'intermédiaire des bornes d'arrivée 302, et au bus de transfert 150, par l'intermédiaire des bornes de transfert. Le bornier de transfert 350 est représenté schématiquement à la figure 5.

On comprend que le filtre secondaire 322 définit les critères de détection des défauts électriques détectés par le microcontrôleur 320 du boitier de départ 300. De préférence, le filtre secondaire 322 définit des critères de détection d'un type de défaut différentiel prédéterminé, qui est choisi parmi les défauts définis dans la norme IEC 60755:2017.

Chaque microcontrôleur 320 est alimenté en énergie électrique de fonctionnement par l'intermédiaire du bus de transfert 150, indépendamment de la configuration, armée ou déclenchée, du mécanisme de commutation, ici les moyens de coupure électromécaniques 310, du boitier départ 300.

Chaque boitier de départ 300 comprend ici un actionneur 324, qui est configuré pour déplacer les moyens de coupure électromécaniques 310 dans la position ouverte lorsque l'actionneur reçoit un signal de déclenchement, le microcontrôleur 320 étant configuré pour envoyer à l'actionneur 324 le signal de déclenchement lors de la détection d'un défaut différentiel.

Chaque boitier de départ 300 est configuré pour passer de la configuration fermée à la configuration ouverte lorsque les moyens de détection secondaires 312 détectent un défaut électrique.

On définit un délai d'ouverture ΔO comme étant un intervalle de temps entre l'instant de la détection du défaut électrique et le début du mouvement des contacts séparables des moyens de coupure électromécaniques 310, de la position fermée vers la position ouverte. Dans l'exemple illustré, le délai d'ouverture inclut le délai du traitement des mesures par le microcontrôleur 320, ainsi que le temps pour que le microcontrôleur 320 envoie l'ordre de coupure à l'actionneur 324. Typiquement, le délai d'ouverture ΔO est de l'ordre de la milliseconde, par exemple de 1 ms à 9 ms.

Dans une configuration minimale de l'ensemble de distribution 100, l'ensemble de distribution comprend le dispositif de distribution 110, sur lequel sont montés le boitier principal 200 et un seul boitier de départ 300. On suppose que l'ensemble de distribution 100 est relié à une source de puissance, par l'intermédiaire des bornes d'entrée 204, tandis qu'une charge électrique est connectée aux bornes de départ 304.

Dans une configuration de fonctionnement normal, le boitier principal 200 est initialement dans la configuration passante, tandis que le boitier de départ 300 est initialement dans la configuration fermée. Ainsi, les bornes de départ 304 sont chacune électriquement reliées à une borne de sortie 204 respective, par l'intermédiaire de la barre conductrice 122 associée. Lorsqu'un défaut électrique survient, par exemple en raison d'une défaillance de la charge électrique, le défaut électrique est détectable à la fois par le boitier principal 200, au moyen des moyens de détection principaux 212, et par le boitier de départ 300, au moyen des moyens de détection secondaires 312.

Autrement dit, les critères de détection de défaut électrique utilisés du boitier principal 200 sont identiques au critère de détection de défaut électrique utilisés par le boitier de départ 300 considéré. Dans l'exemple illustré, les critères de détection sont définis par les filtres de détection, soit ici le filtre primaire 222 pour le boitier principal 200, et le filtre secondaire 322 pour le boitier de départ 300. On suppose définissent fonctionnellement les mêmes critères de détection, autrement dit que le filtre primaire 222 et que le filtre secondaire 322 sont fonctionnellement identiques l'un à l'autre, de sorte que le boitier principal 200 et le boitier de départ 300 sont configurés pour détecter des défauts électriques selon les mêmes critères.

L'ensemble de distribution 100 est configuré pour que, lorsqu'un défaut électrique correspondant aux critères du filtre primaire 222 et du filtre secondaire 322 survient :
- le boitier de départ 300 détecte le défaut électrique au moyen des moyens de détection secondaire 312, puis le microcontrôleur 320 du boitier de départ commande le passage en position ouverte des moyens de coupure électromécaniques 310,
- tandis que le boitier principal 200 détecte le même défaut électrique au moyen des moyens de détection principaux 212, puis l'unité de contrôle 214 du boitier principal 200 commande le passage des moyens de coupure 210 en configuration de coupure.

Compte tenu de la proximité du boitier principal 300 avec le boitier de départ 300, on considère que la détection du même défaut électrique par le boitier principal 200 et par le boitier de départ 300 est simultanée.

L'ensemble de distribution 100 est configuré pour que le boitier principal 200 passe dans la configuration de coupure avant que le premier boitier ne passe de la configuration fermée à la configuration ouverte. Autrement dit, le délai de coupure ΔC est inférieur au délai d'ouverture ΔO, de sorte que lorsque les contacts séparables des moyens de coupure électromécaniques 310 commencent à se déplacer de la position fermée vers la position ouverte, alors aucun courant ne circule dans le bus de puissance 114. Les contacts séparables des moyens de coupure électromécaniques 310 s'ouvrent sans qu'il y ait génération d'arc électrique, ce qui permet de réduire l'usure des contacts séparables et contribue à la durabilité des boitiers de départ 300.

Une fois que le boitier de départ 300 est en configuration ouverte, le boitier principal 200 est configuré pour passer de la configuration de coupure à la configuration passante au bout d'un temps d'attente ΔW prédéterminé, le temps d'attente ΔW étant supérieur au délai d'ouverture.

On considère le cas où l'ensemble de distribution comprend deux boitiers de départ 300 ou plus, les deux boitiers de départ 300 incluant un premier boitier et un deuxième boitier, qui sont conjointement connectées aux barres conductrices 122. Autrement dit, les deux boitiers de départ 300 sont montés sur le même dispositif de distribution 110. En fonctionnement normal de l'ensemble de distribution 100, le boitier principal 200 est initialement dans la configuration passante, tandis que le premier boitier 300 et le deuxième boitier 300 sont chacun initialement dans la configuration fermée. On suppose que le premier boitier 300 et le deuxième boitier 300 sont chacun connectés à une charge électrique respective.

Lorsqu'un défaut électrique survient aux bornes de départ 300 du premier boitier 300, par exemple suite à une défaillance de la charge électrique connectée au premier boitier 300, le premier boitier 300 de départ détecte ce défaut électrique au moyen des moyens de détection secondaire 312 du premier boitier 300 et, simultanément, le boitier principal 200 détecte aussi ce défaut électrique au moyen des moyens de détection principaux 212. Comme précédemment, le boitier principal 200 passe dans la configuration de coupure avant que le premier boitier 300 ne passe de la configuration fermée à la configuration ouverte, tandis que le deuxième boitier 300 reste dans la configuration fermée.

Ensuite, le boitier principal 200 passe de la configuration de coupure à la configuration passante au bout du temps d'attente ΔW, le deuxième boitier 300 restant dans la configuration fermée. Le temps d'attente ΔW est suffisamment court pour que la rupture d'alimentation subie par la charge électrique associée au deuxième boitier 300 n'ait pas d'impact négatif. En pratique, le temps d'attente ΔW est inférieur à 20 ms, de préférence inférieur à 15 ms, de préférence encore inférieur à 10 ms.

Selon un autre aspect de l'invention, lors du montage de chaque boitier de départ 300 sur le dispositif de distribution 110, chaque boitier de départ 300 en position montée est apte à identifier sa position le long du bus de transfert 150 et, par extension, sa position le long du dispositif de distribution 110. À cet effet, le bus de transfert 150 comprend, pour chaque zone de montage 154, un circuit d'identification 160 en position. Un exemple de réalisation des circuit d'identification 160 est visible à la figure 6 a). Chaque circuit d'identification 160 est configuré pour transmettre au boitier de départ 300 en configuration montée une information relative à la position, le long de l'axe principal, de la zone de montage 154 sur laquelle le boitier de départ 300 est monté.

Chaque boitier de départ 300 comprend avantageusement des bornes de positionnement, qui sont configurées pour être électriquement connectées au circuit d'identification 160 associé à la zone de montage 154 considérée. Les bornes de positionnement, qui ne sont pas représentées, font ici partie du bornier de transfert 150. Autrement dit, le bornier de transfert 150 est avantageusement configuré pour être conjointement connecté aux lignes de transfert 156 et au circuit d'identification 160.

Selon un exemple de réalisation préféré, le circuit d'identification 160 comprend un composant d'identification 162, qui est choisi parmi une liste incluant une résistance, une inductance, une diode Zener, une référence de tension ou une capacité, de sorte que lorsque le boitier de départ 300 est en configuration montée et est alimenté, pour son fonctionnement, en énergie électrique, le boitier de départ 300 applique une première grandeur électrique aux bornes du composant d'identification 162 et mesure une deuxième grandeur électrique caractéristique du composant d'identification 162, la deuxième grandeur électrique caractéristique étant liée de manière univoque, préférentiellement de manière bijective, à la position unique de la zone de montage considérée. Ainsi le boitier de départ 300 identifie de lui-même sa position, par exemple en mesurant la deuxième grandeur électrique caractéristique et en comparant la valeur mesurée à une table de correspondance prédéterminée, chaque intervalle étant associé de manière univoque, préférentiellement de manière bijective à une position le long du dispositif de distribution 110. La table de correspondance relie de manière univoque, préférentiellement de manière bijective, des intervalles de la deuxième grandeur électrique caractéristique à une position unique le long du bus de transfert 150. De préférence, la table de correspondance est préalablement enregistrée dans une mémoire du microcontrôleur 320.

De préférence, le circuit d'identification 160 ne comprend qu'un unique composant d'identification 162 choisi parmi une résistance, une inductance, une diode Zener, une référence de tension ou une capacité. En alternative non illustrée, plusieurs composants d'identification 162 sont combinés au sein du circuit d'identification 160.

Le composant d'identification 162 est de préférence une résistance électrique, comme dans l'exemple illustré. Dans l'exemple illustré, le boitier de départ 300 injecte un courant d'une valeur prédéterminée dans le composant d'identification 162, et mesure une tension électrique aux bornes du composant d'identification. En variante non illustrée, lorsque le bus de transfert 150 comporte des lignes d'alimentation, on mesure directement une tension aux bornes du composant d'identification 162, sans que le boitier de départ n'injecte de courant dans le composant d'identification.

Le circuit d'identification 160 est ainsi particulièrement simple à réaliser, et robuste. À chaque zone de montage 154 est associé une résistance d'une valeur, exprimée en Ohm, qui est unique et qui est suffisamment différente des autres résistances associées aux autres zones de montage 154, de sorte que la tension mesurée aux bornes de chaque composant d'indentification 162 est suffisamment éloignée des autres tensions mesurées. De préférence, les composants d'identifications 162, ici des résistances, présentent chacune une valeur de résistance propre, qui est exprimée en Ohm et qui évolue graduellement à mesure qu'on se déplace le long de l'axe principal.

Dans l'exemple non limitatif illustré, chaque boitier de départ 300 est configuré pour appliquer une tension de 3 V aux bornes du circuit d'indentification 160. On désigne par R1 une résistance interne du boitier de départ 300, et par R2 la valeur de la résistance qu'est le composant d'identification 162. Le bus de transfert 150 comprend 15 zones de montage 154. Les 3 V sont répartis sur les 15 intervalles, de préférence régulièrement répartis : il y a donc 15 intervalles et 16 « piliers » séparant les intervalles, ce qui représente un pas de 3 V / 16 = 0,1875 V. Pour chaque position n entre 1 et 15, on calcule la valeur R2 correspondante à partir de la formule 3 V = n×0,1875×(R1+R2)/R2. D'autres méthodes sont bien entendu possibles, notamment en fonction de la nature des composants d'identification 162 utilisés, etc.

Dans l'exemple illustré, chaque boitier de départ 300 est alimenté, pour son fonctionnement, en énergie électrique par l'intermédiaire des lignes de transfert 156 portées par le bus de transfert 150, En alternative non représentée, chaque boitier de départ 300 comprend un dispositif de stockage d'énergie électrique, par exemple une pile ou, avantageusement, un condensateur, qui ne nécessite pas de remplacement dans la vie du boitier de départ 300.

Quel que soit le type de l'alimentation des boitiers de départ 300, chaque boitier de départ 300 connait sa position dès qu'il est monté sur le dispositif de distribution 110.

L'ensemble de distribution 100 de l'invention permet la mise en œuvre d'un procédé de localisation de chaque boitier de départ 300 lors du montage de ce boitier de départ. Initialement, on fournir un exemplaire du dispositif de distribution 110 tel que défini précédemment, et un exemplaire d'un boitier de départ 300 tel que défini précédemment.

Ensuite, on monte le boitier de départ 300 sur le dispositif de distribution 110 au niveau de l'une des zones de montage 154 libre, de sorte que le bornier de transfert 350 est électriquement connecté au bus de transfert 150, alimentant en énergie électrique le microcontrôleur 320 du boitier de départ 300, tandis que les contacts de positionnement sont électriquement connectés au circuit d'identification 160.

Ensuite, au moyen du microcontrôleur 320 alimenté en énergie, on applique une première grandeur électrique aux bornes du composant d'identification 162 par l'intermédiaire des contacts de positionnement, et on mesure une deuxième grandeur électrique caractéristique du composant d'identification 162.

Ensuite, on déduit la position unique, le long du bus de transfert, de la zone de montage 154 sur laquelle est monté le boitier de départ 300, au moyen d'une table de correspondance, préalablement enregistrée dans une mémoire du microcontrôleur 320, la table de correspondance reliant de manière univoque, préférentiellement de manière bijective, des intervalles de la deuxième grandeur électrique caractéristique à une position unique le long du bus de transfert 150.

Avantageusement, chaque boitier de départ 300 transmet ensuite au boitier principal 200, par l'intermédiaire du bus de transfert 150, des informations liées à la position unique du boitier de départ 300 considéré. Selon un exemple préféré, le bus de transfert 150 est configuré pour ménager un bus de transmission de données dit bus CAN, de l'anglais *Controller Area Network,* comme défini dans la norme ISO 11898-2:2024, pour la communication entre les boitiers de départ 300 et le boitier principal 200. Lorsqu'un boitier de départ 300 est nouvellement monté sur le dispositif de distribution 110, une fois que boitier de départ 300 a déterminé sa position unique, au moyen du microcontrôleur 320, le boitier de départ détermine aussi un numéro CAN, et transmet ce numéro au boitier principal 200, par l'intermédiaire du bus CAN. La détermination du numéro CAN est faite par exemple au moyen d'une table, préalablement enregistrée dans la mémoire du microcontrôleur 320, reliant position unique et numéro CAN. Le boitier principal 200 utilise ensuite cette adresse CAN pour envoyer des ordres spécifiques au boitier de départ 300 correspondant, par exemple des ordres d'ouverture, des ordres de fermeture, des ordres de configuration, etc. Le bus de transfert 150 est avantageusement utilisé aussi pour le transfert d'informations de diagnostic du boitier de départ 300 au boitier principal 200, par exemple des informations reliées à l'état du boitier de départ 300, aux causes de déclenchement, etc.

Les modes de réalisation et les variantes mentionnées ci-dessus peuvent être combinés entre eux pour générer de nouveaux modes de réalisation de l'invention.

## Revendications

1. Dispositif de distribution (110) de puissance électrique, configuré pour distribuer de l'énergie électrique provenant d'une source de puissance à au moins une charge électrique, le dispositif de distribution (110) comprenant :
- un bus de puissance (124), qui comprend plusieurs barres conductrices (122) :
• qui incluent au moins une barre de phase et éventuellement une barre de neutre, la barre de neutre étant associée au neutre de la source de puissance, chaque barre de phase étant respectivement associée à une phase de la source de puissance,
• qui s'étendent parallèlement entre elles selon un axe principal (A110) du dispositif de distribution (110),
dans lequel :
- le bus de puissance (124) est configuré pour recevoir au moins deux boitiers de départ (300), chaque boitier de départ comprenant :
• un bornier d'arrivée, qui est connectable aux barres conductrices (122) de manière réversible et qui comprend des bornes d'arrivée (302), chaque borne d'arrivée (302) étant configurée pout être électriquement connectée à une barre conductrice (122) respective, et
• un bornier de départ, qui est configuré pour être connecté à une charge électrique et qui comprend des bornes de départ (304), chaque borne de départ (304) étant respectivement associée à une borne d'arrivée (302) respective,
- le dispositif de distribution (110) comprend aussi un bus de transfert (150), qui comprend :
• un corps (152), qui est réalisé en un matériau électriquement isolant, qui présente une forme allongée s'étendant le long du bus de puissance (124), et qui définit plusieurs zones de montage (154) de chaque boitier de départ (300), les zones de montage étant réparties le long de l'axe principal (A110) et étant chacune associée à une position unique le long de l'axe principal (A110),
• au moins deux lignes de transfert (156), qui s'étendent le long du corps (152) est qui sont configurées pour être électriquement connectées à chaque boitier de départ (300) lorsque le boitier de départ (300) est connecté au bus de puissance (124) au niveau d'une des zones de montage (154), le boitier de départ (300) étant dans une position montée sur le dispositif de distribution (110),
- le bus de transfert (150) comprend, pour chaque zone de montage(154), un circuit d'identification (160) en position, qui est configuré pour transmettre au boitier de départ (300) en configuration montée une information relative à la position, le long de l'axe principal (A110), de la zone de montage (154) sur laquelle le boitier de départ (300) est monté.

2. Dispositif de distribution (110) selon la revendication 1, dans lequel :
- pour chaque zone de montage (154), le circuit d'identification (160) comprend un composant d'identification (162), qui est choisi parmi une résistance, une inductance, une diode Zener, une référence de tension ou une capacité, de sorte que lorsque le boitier de départ (300) est en configuration montée et est alimenté en énergie électrique, le boitier de départ (300) applique une première grandeur électrique aux bornes du composant d'identification (162) et mesure une deuxième grandeur électrique caractéristique du composant d'identification (162), la deuxième grandeur électrique caractéristique étant liée, de manière univoque, à la position unique de la zone de montage (154) considérée.

3. Dispositif de distribution (110) selon la revendication 2, dans lequel :
- pour chaque zone de montage (154), le composant d'identification (162) est une résistance.

4. Dispositif de distribution (110) selon la revendication 3, dans lequel :
- les résistances présentent chacune une valeur de résistance propre, qui est exprimée en Ohm et qui évolue graduellement à mesure qu'on se déplace le long de l'axe principal (A110).

5. Dispositif de distribution (110) selon l'une quelconque des revendications 1 à 4, dans lequel :
- les zones de montage (154) sont réparties régulièrement le long de l'axe principal (A110).

6. Dispositif de distribution (110) selon la revendication 5, dans lequel :
- le bus de transfert (150) comprend une pluralité de zones de montage (154), par exemple quinze zones de montage (154), qui sont espacées les unes des autres d'un pas régulier, par exemple multiple de 9mm.

7. Boitier de départ (300), configuré pour être conjointement connecté à un dispositif de distribution (110) conforme à l'une quelconque des revendications 1 à 6, le boitier de départ comprenant :
- un bornier d'arrivée, qui est connectable au bus de puissance (124) de manière réversible et qui comprend des bornes d'arrivée (302), chaque borne d'arrivée (302) étant configurée pout être électriquement connectée à une barre conductrice (122) respective, et
- un bornier de départ, qui est configuré pour être connecté à une charge électrique et qui comprend des bornes de départ (304), chaque borne de départ étant associée à une borne d'arrivée (302) respective,
- un bornier de transfert (350), qui comprend :
• des bornes de transfert, qui sont configurées pour être connectées au bus de transfert (150) de manière à être électriquement connectées aux lignes de transfert (156), et
• des bornes de positionnement, qui sont configurées pour être électriquement connectées au circuit d'identification (160) associé à la zone de montage (154) considérée.

8. Boitier de départ (300) selon la revendication 7, dans lequel :
- le boitier de départ comprend aussi un microcontrôleur (320), qui est configuré pour que, lorsque le boitier de départ est en configuration montée sur une des zones de montage (154) et est alimenté en énergie électrique, le boitier de départ (300) applique, au moyen du microcontrôleur (320), une première grandeur électrique aux bornes du composant d'identification (162) et mesure une deuxième grandeur électrique caractéristique du composant d'identification (162), la deuxième grandeur électrique caractéristique étant liée, de manière univoque, à la position unique de la zone de montage (154) considérée.

9. Ensemble de distribution (100), comprenant :
- le dispositif de distribution (110) selon l'une quelconque des revendications 1 à 6,
- un exemplaire du boitier de départ (300) selon l'une quelconque des revendications 7 ou 8,
**ET / OU**
- un boitier principal (200), qui est configuré pour être monté sur le dispositif de distribution (110) et qui comprend :
• des bornes d'entrée (202), chaque borne d'entrée (202) étant configurée pour être reliée à une phase respective et éventuellement au neutre de la source de puissance,
• des bornes de sortie (204), qui sont configurées pour être reliées aux barres conductrices (122), chaque borne de sortie (204) étant associée à une barre conductrice (122) respective et à une borne d'entrée (202) respective,
dans lequel :
- le bus de transfert (150) comprend également une zone de connexion (158), qui est prévue pour la connexion à un bornier complémentaire (250) du boitier principal (200) en position montée, de sorte que le boitier principal (200) est électriquement connecté aux lignes de transfert (156),
- le boitier principal (200) est configuré pour recevoir, par l'intermédiaire des lignes de transfert (156) et pour chaque boitier de départ (300) en position montée, des informations relatives à la position, le long de l'axe principal (A110), de la zone de montage (154) sur laquelle le boitier de départ (300) considéré est monté,
- le boitier de départ (300) et / ou le boitier principal sont chacun en configuration montée sur le dispositif de distribution (110).

10. Tableau électrique (10), comprenant :
- un coffre (12), délimitant une enceinte (V12) et présentant un fond (14),
- l'ensemble de distribution (10) selon la revendication 9,
dans lequel :
- l'ensemble de distribution est fixé sur le fond (14) du coffre (12).

11. Procédé de localisation d'un boitier de départ (300) monté sur un dispositif de distribution (110), le procédé de localisation comprenant :
- fournir le dispositif de distribution (110) conforme à l'une quelconque des revendications 1 à 6 et un boitier de départ (300) conforme à l'une quelconque des revendications 7 ou 8,
- monter le boitier de départ (300) sur l'une des zones de montage (154), de sorte que :
• le bornier de transfert (350) est électriquement connecté au bus de transfert (105), alimentant en énergie électrique un microcontrôleur (320) du boitier de départ (300),
• le bornier de transfert (350) est électriquement connecté au circuit d'identification (160),
- ensuite, au moyen du microcontrôleur (320) alimenté en énergie :
• appliquer une première grandeur électrique aux bornes du composant d'identification (162) par l'intermédiaire du bornier de transfert (350), et mesurer une deuxième grandeur électrique caractéristique du composant d'identification (162), puis
• en déduire la position unique, le long du bus de transfert (150), de la zone de montage (154) sur laquelle est monté le boitier de départ (300), au moyen d'une table de correspondance, préalablement enregistrée dans une mémoire du microcontrôleur (320), reliant de manière univoque des intervalles de la deuxième grandeur électrique caractéristique à une position unique le long du bus de transfert (150).
